# EUROPÄISCHE PATENTANMELDUNG

(11) **EP 1 095 568 A2**
(43) Veröffentlichungstag der Anmeldung: **02.05.2001**
(21) Anmeldenummer: 00103733.2
(22) Anmeldetag: 22.02.2000
(51) Int. Cl.: A21D 13/00, A21D 13/08, A23G 3/00, A23G 9/02, A23P 1/08

(54) **Füllung für Backwaren**

(30) Priorität: 26.10.1999 DE 19951424
(71) Anmelder: Brinker, Karl, 44649 Herne (DE)
(72) Erfinder: Brinker, Karl, 44649 Herne (DE)
(74) Vertreter: COHAUSZ HANNIG DAWIDOWICZ & PARTNER

(57) **Zusammenfassung**

Die Erfindung betrifft eine Füllung für Backwaren insbesondere für Brötchen, Brot, Kuchen oder Teiglinge. Die Außenform weist oder bildet zumindest auf einer Seite eine Verjüngung auf, die in einer Kante oder Spitze ausläuft.

## Beschreibung

Die Erfindung betrifft eine Füllung für Backwaren insbesondere für Brötchen, Brot, Kuchen oder Teiglinge.

Es ist bekannt, Backwaren mit einer Füllung zu versehen. In der Regel wird diese Füllung vor dem Backen in den Teig eingebracht. Es ist aber auch bekannt, Backwaren nach ihrem Ausbacken mit einer Füllung zu versehen. So werden zum Beispiel ausgebackene Berliner durch eine Spritze mit einer Marmeladenmasse gefüllt. Ein Einbringen der Füllung nach dem Backen hat insbesondere den Vorteil, daß die Füllung der Backhitze nicht ausgesetzt ist und sich damit nicht verändern kann. Allerdings erfordert ein nachträgliches Einbringen in der Füllung aufwendige technische Hilfsmittel.

Aufgabe der Erfindung ist es, für Backwaren eine Füllung zu schaffen, die einfach und leicht insbesondere auch von dem Verbraucher einbringbar ist.

Diese Aufgabe wird erfindungsgemäß dadurch gelöst, daß die Außenform zumindest auf einer Seite eine Verjüngung aufweist oder bildet, die in einer Kante oder Spitze ausläuft.

Aufgrund der sich verjüngenden Außenform der Füllung kann diese in die vollständig, teilweise oder nicht ausgebackene Backware leicht eingedrückt werden, so daß sie in das Innere der Backware gelangt. Hierzu sind nicht unbedingt Gerätschaften erforderlich, sondern es kann auch von Hand geschehen. Besonders vorteilhaft kann dies bei halbgebackenen Backwaren geschehen, das heißt der Verbraucher bringt die Füllung von Hand selber in das halbgebackene Gebäck ein, um danach dieses aufzubacken bzw. fertig zu backen.

Um zu Verhindern, daß die Kante oder Spitze der Füllung ganz oder teilweise abbricht, wird vorgeschlagen, daß die Kante oder Spitze abgerundet ist.

Besonders vorteilhaft ist es, wenn die Füllung aus einer gefrorenen Masse besteht. Im gefrorenen Zustand ist die Füllung besonders einfach handhabbar und in das Gebäck eindrückbar.

Vorzugsweise wird vorgeschlagen, daß die Füllung Fleich, Fisch, Pflanzliches und/oder eine Süßware insbesondere in einer angemachten Form aufweist.

Weitere vorteilhafte Ausgestaltungen der Erfindung sind in den übrigen Unteransprüchen aufgeführt.

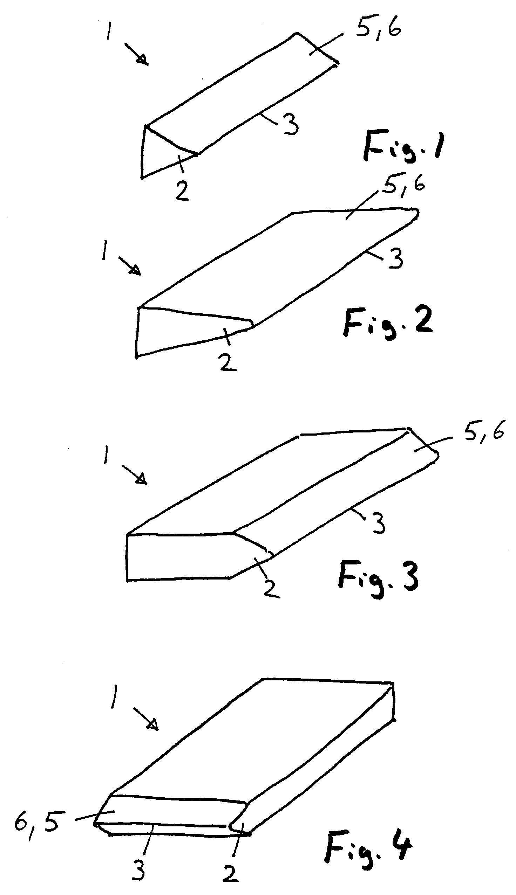

Ausführungsbeispiele der Erfindung sind in den Zeichnungen perspektivisch dargestellt und werden im folgenden näher beschrieben. Es zeigen
- Fig. 1 und 2: Füllungen in Prismaform,
- Fig. 3: eine Füllung in Prismaform mit Verlängerung, wobei die Verjüngung über die Längsseite läuft,

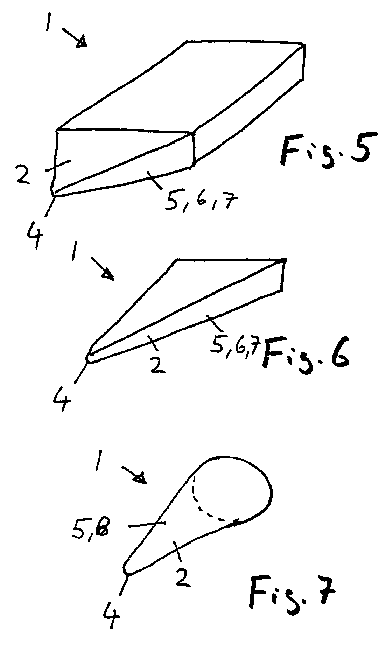

- Fig. 4: eine Füllung ähnlich Fig. 3 mit einer Verjüngung an der kurzen Seite,
- Fig. 5: eine Füllung mit pyramidenförmiger Verjüngung,
- Fig. 6: eine pyramidenförmige Füllung,
- Fig. 7: eine kegelförmige Füllung.

Die Füllung 1 besteht aus einer Lebensmittelmasse insbesondere vollständig oder aus einem überwiegenden Teil aus Fleisch, Fisch, pflanzlichem Material wie Gemüse oder Salat oder aus einer Süßware wie eine Schokoladen- oder Bonbonmasse. Hierbei ist die Füllung aus verschiedenen Zutaten angebracht und weist insbesondere auch Gewürze und Aromen auf.

Die Füllung besitzt eine Außenform mit einer Verjüngung 2 auf einer Seite, die in einer Kante 3 oder eine Spitze 4 endet. Hierbei ist die Kante oder Spitze vorzugsweise abgerundet.

Die Füllungsmasse ist von einer solchen Konsistenz, daß sie genügend fest ist, um in eine Backware wie ein Brötchen, ein Brot, ein Snack, ein Kuchen oder ein gegarter oder ungegarter Teigling seitlich oder von oben oder unten hineingeschoben zu werden, wobei die Backware vollständig, zum Teil oder nicht ausgebacken ist. Die feste Konsistenz der Füllung wird entweder durch die Zutaten der Füllmasse insbesondere auch durch festigende Mittel wie Gelatine oder Stärke erreicht, oder aber die Füllmasse befindet sich in einem tiefgefrorenen Zustand, so daß sie erst nach dem Eindrücken in die Backware dort auftaut.

Wie die Zeichnungen darstellen, besitzt die Füllung die Form eines Keiles 5, eines Prismas 6, einer Pyramide 7 oder eines Kegels 8. Auf der der Verjüngung 2 gegenüberliegenden Seite kann eine Verlängerung 9 angeformt sein, die vorzugsweise über ihre Länge einen gleichbleibenden Querschnitt hat. Auch kann der Querschnitt der Füllung eine Herzform aufweisen (in den Zeichnungen nicht dargesteltl).

## Patentansprüche

1. Füllung (1) für Backwaren insbesondere für Brötchen, Brot, Kuchen oder Teiglinge, **dadurch gekennzeichnet,** daß die Füllung von fester Konsistenz ist und die Außenform zumindest auf einer Seite eine Verjüngung (2) aufweist oder bildet, die in einer Kante (3) oder Spitze (4) ausläuft.

2. Füllung nach Anspruch 1, **dadurch gekennzeichnet,** daß die Kante (3) oder Spitze (4) abgerundet ist.

3. Füllung nach Anspruch 1 oder 2, **dadurch gekennzeichnet,** daß sie aus einer gefrorenen Masse besteht.

4. Füllung nach einem der vorherigen Ansprüche, **dadurch gekennzeichnet,** daß sie Fleisch, Fisch, Pflanzliches und/oder eine Süßware insbesondere in einer angemachten Form aufweist,

5. Füllung nach einem der vorherigen Ansprüche, **dadurch gekennzeichnet,** daß die Füllung insbesondere ihre Verjüngung die Form eines Keiles (5), eines Prismas (16), einer Pyramide (7) oder eines Kegels (8) aufweist.

6. Füllung nach Anspruch 5, **dadurch gekennzeichnet,** daß auf der der Verjüngung (2) gegenüberliegenden Seite eine Verlängerung (9) angeformt ist.

7. Füllung nach Anspruch 6, **dadurch gekennzeichnet,** daß die Verlängerung (9) über ihre Länge einen gleichbleibenden Querschnitt aufweist.

8. Füllung nach einem der vorherigen Ansprüche, **dadurch gekennzeichnet,** daß sie einen Querschnitt in Herzform aufweist.

9. Füllung nach einem der vorherigen Ansprüche, **dadurch gekennzeichnet,** daß das Gebäck oder der Teigling in einem halbgebackenen Zustand ist.
